# FASCICULE DE BREVET EUROPEEN

(11) **EP 3 070 133 B1**
(45) Date de publication et mention de la délivrance du brevet: **20.02.2019**
(21) Numéro de dépôt: 15159581.6
(22) Date de dépôt: 18.03.2015
(51) Int. Cl.: C09D 133/16, C09D 143/02, C09D 143/04

(54) **PIÈCE D'HORLOGERIE OU DE BIJOUTERIE COMPRENANT UNE SURFACE RECOUVERTE D'UN AGENT ÉPILAME ET PROCÉDÉ D'ÉPILAMAGE D'UN TEL SUBSTRAT**
UHR ODER SCMUCKTÜCK, DAS EINE MIT EPILAMISIERUNGSMITTEL BEDECKTE OBERFLÄCHE UMFASST, UND EPILAMISIERUNGSVERFAHREN EINES SOLCHEN SUBSTRATS
TIMEPIECE OR PIECE OF JEWELLERY COMPRISING A SURFACE COVERED WITH AN EPILAME AGENT AND METHOD FOR EPILAMING SUCH A SUBSTRATE

(43) Date de publication de la demande: 21.09.2016
(73) Titulaire: The Swatch Group Research and Development Ltd., 2074 Marin (CH)
(72) Inventeur: Letondor, Christophe, 2525 Le Landeron (CH); Rannoux, Claire, 1003 Lausanne (CH)
(74) Mandataire: ICB SA

(56) Documents cités:
- EP-A1- 2 684 942
- WO-A1-2012/061021
- US-A- 4 147 851

## Description

### Domaine de l'invention

La présente invention se rapporte au domaine de la mécanique et notamment au domaine de l'horlogerie ou de la bijouterie. Elle concerne plus particulièrement un substrat, notamment un substrat d'un élément d'une pièce d'horlogerie ou de bijouterie comprenant une surface recouverte au moins partiellement d'un agent épilame. Elle concerne également un procédé d'épilamage d'un tel substrat, ainsi qu'une pièce d'horlogerie ou de bijouterie comprenant un élément comportant un tel substrat.

### Arrière-plan de l'invention

Il existe différents procédés pour modifier l'état de surface d'un substrat par un traitement au moyen d'un agent approprié de manière à améliorer spécifiquement certaines propriétés de surface. Par exemple, dans le domaine de la mécanique, et en particulier dans le domaine de l'horlogerie, mais aussi dans le domaine de la bijouterie, l'épilamage d'une surface d'une pièce ou d'un élément est souvent réalisé au moyen d'un agent épilame afin de contrôler et de réduire l'énergie de surface de ladite surface au cours de son utilisation. Plus particulièrement, un agent épilame a pour but d'empêcher l'étalement des huiles ou lubrifiants sur les éléments d'une pièce d'horlogerie ou de bijouterie en formant une surface hydrophobe et lipophobe permettant au lubrifiant de rester à un endroit prédéterminé de la surface traitée.

Toutefois, les substances utilisées à l'heure actuelle pour l'épilamage présentent différents inconvénients. Plus spécifiquement, les agents épilames connus, tels que le Fixodrop® FK/BS de Moebius® ou la gamme Fluorad™ de 3M™, présentent une mauvaise résistance aux lavages horlogers. La demande de brevet US 2012/0088099 résout partiellement ce problème en proposant d'utiliser un agent épilame porteur d'une fonction catéchol en bout de chaine, cette fonction catéchol étant capable de se fixer solidement à la surface des substrats. Toutefois, la résistance aux lavages horlogers de ces agents épilames n'a pas été améliorée sur tous les substrats, notamment sur l'or et l'acier qui sont des substrats très fréquents dans le domaine de l'horlogerie ou de la bijouterie. Ainsi, l'utilisation des agents épilames connus est généralement limitée à certains matériaux, ce qui oblige l'utilisateur à avoir à sa disposition différents types d'agents épilames en fonction de la nature des surfaces à traiter. Une solution pour résoudre ce problème est décrite par exemple dans la demande WO 2012/085130. Cette solution consiste à utiliser comme composition épilame un mélange de composés de nature différente (thiol et biphosphonique) dont l'effet synergique favorise l'adhésion de l'épilame sur le substrat. Toutefois, la synthèse de chacun de ces composés nécessite au moins quatre étapes, de sorte que le procédé de synthèse pour l'ensemble de la composition épilame est long et

EP 2 684 942 A1 divulgue un agent d'épilamage constitué d'un polymère A-F comprenant une terminaison A comprenant un groupe d'ancrage et d'un polymère F composé uniquement de monomère perfluoré.

### Résumé de l'invention

L'invention, telle que définie dans les revendications, a notamment pour objectif de pallier les différents inconvénients des agents épilames connus.

Plus précisément, un objectif de l'invention est de fournir une pièce d'horlogerie ou de bijouterie comprenant un élément comprenant un substrat comprenant une surface dont au moins une partie est recouverte d'un agent épilame offrant une résistance aux lavages accrue par rapport aux agents épilames connus.

L'invention a également pour objectif de fournir un agent épilame universel pouvant être utilisé pour tout type de matériau.

L'invention a également pour objectif de fournir un agent épilame simple à fabriquer en peu d'étapes, voire en une seule étape de synthèse.

A cet effet, la présente invention concerne un substrat comprenant une surface dont au moins une partie est recouverte d'un agent épilame.

Selon l'invention, ledit agent épilame comprend au moins un composé sous la forme d'un copolymère statistique comprenant des unités M, des unités N et optionnellement au moins une unité P, associées par liaisons covalentes par leurs chaines principales et réparties de manière aléatoire, où
M est 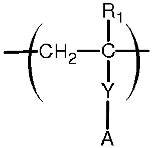 N est 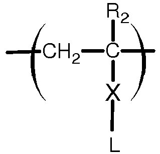 P est 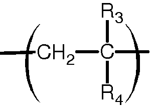
où R₁, R₂, R₃, identiques ou différents, sont H, un groupe alkyle en C₁-C₁₀, alkényle en C₁-C₁₀, et de préférence H, CH₃
Y, X, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone
A, identique ou différent, constitue un groupement d'ancrage au substrat, et est choisi parmi le groupe comprenant les thiols, thioethers, thioesters, sulfures, thioamides, silanols, alkoxysilanes, halogénures de silane, hydroxyles, phosphates, acides phosphoniques protégés ou non, phosphonates protégés ou non, aminés, ammoniums, hétérocycles azotés, acides carboxyliques, anhydrides, catéchol
L, identique ou différent, est un groupement carboné en C₁-C₂₀ halogéné, de préférence fluoré
R₄, identique ou différent, est H, CH₃, une chaîne hydrocarbonée pouvant contenir au moins un hétéroatome, linéaire ou ramifiée, saturée ou insaturée, comprenant au moins 2 atomes de carbone.

Un tel agent épilame présente une résistance aux lavages améliorée et présente un caractère universel, autorisant son utilisation pour tout type de matériau.

La présente invention concerne également un procédé d'épilamage d'au moins une partie d'une surface d'un substrat d'un élément d'une pièce d'horlogerie ou de bijouterie comprenant les étapes de :
a) préparation d'un agent épilame comprenant au moins un copolymère statistique tel que défini ci-dessus
b) optionnellement, préparation de la surface du substrat
c) mise en contact de la surface du substrat avec l'agent épilame
d) séchage.

La présente invention concerne également l'utilisation d'un copolymère statistique comprenant des unités M, des unités N et optionnellement au moins une unité P, associées par liaisons covalentes par leurs chaines principales et réparties de manière aléatoire, où
M est 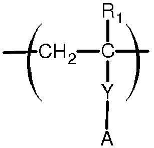 N est 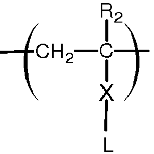 P est 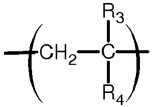
où R₁, R₂, R₃, identiques ou différents, sont H, un groupe alkyle en C₁-C₁₀, alkényle en C₁-C₁₀, et de préférence H, CH₃
Y, X, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone
A, identique ou différent, constitue un groupement d'ancrage au substrat, et est choisi parmi le groupe comprenant les thiols, thioethers, thioesters, sulfures, thioamides, silanols, alkoxysilanes, halogénures de silane, hydroxyles, phosphates, acides phosphoniques protégés ou non, phosphonates protégés ou non, aminés, ammoniums, hétérocycles azotés, acides carboxyliques, anhydrides, catéchol
L, identique ou différent, est un groupement carboné en C₁-C₂₀ halogéné, de préférence fluoré
R₄, identique ou différent, est H, CH₃, une chaîne hydrocarbonée pouvant contenir au moins un hétéroatome, linéaire ou ramifiée, saturée ou insaturée, comprenant au moins 2 atomes de carbone, comme agent épilame d'au moins une partie d'une surface d'un substrat d'un élément d'une pièce d'horlogerie ou de bijouterie.

### Description détaillée de l'invention

Conformément à la présente invention, un substrat d'un élément d'une pièce d'horlogerie ou de bijouterie, comprend une surface dont au moins une partie est recouverte d'un agent épilame, ledit agent épilame comprenant au moins un composé sous la forme d'un copolymère statistique comprenant des unités M, des unités N et optionnellement au moins une unité P, associés par liaisons covalentes par leurs chaines principales et réparties de manière aléatoire, où
M est 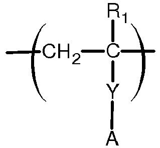 N est 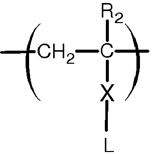 P est 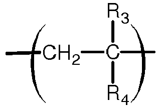
où R₁, R₂, R₃, identiques ou différents, sont H, un groupe alkyle en C₁-C₁₀, alkényle en C₁-C₁₀, et de préférence H, CH₃
Y, X, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone
A, identique ou différent, constitue un groupement d'ancrage au substrat, et est choisi parmi le groupe comprenant les thiols, thioethers, thioesters, sulfures, thioamides, silanols, alkoxysilanes, halogénures de silane, hydroxyles, phosphates, acides phosphoniques protégés ou non, phosphonates protégés ou non, aminés, ammoniums, hétérocycles azotés, tels que imidazole ou pyridine, acides carboxyliques, anhydrides, catéchol
L, identique ou différent, est un groupement carboné en C₁-C₂₀ halogéné, de préférence fluoré
R₄, identique ou différent, est H, CH₃, une chaîne hydrocarbonée pouvant contenir au moins un hétéroatome, linéaire ou ramifiée, saturée ou insaturée, comprenant au moins 2 atomes de carbone.

De préférence, le copolymère statistique comprend des unités M, des unités N et optionnellement au moins une unité P, associés par liaisons covalentes par leurs chaines principales et réparties de manière aléatoire, où
M est 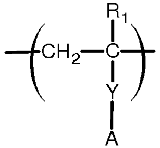 N est 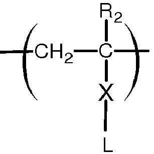 P est 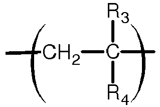
où R₁, R₂, R₃, identiques ou différents, sont H, un groupe alkyle en C₁-C₁₀, alkényle en C₁-C₁₀, et de préférence H, CH₃,
Y, X, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone
A, identique ou différent, constitue un groupement d'ancrage au substrat, et est choisi parmi le groupe comprenant les thiols, thioethers, thioesters, sulfures, thioamides, silanols, alkoxysilanes, halogénures de silane, hydroxyles, phosphates, acides phosphoniques protégés ou non, phosphonates protégés ou non, aminés, ammoniums, hétérocycles azotés, tels que imidazole ou pyridine, acides carboxyliques, anhydrides, catéchol
L, identique ou différent, est un groupement carboné en C₁-C₂₀ halogéné, de préférence fluoré
R₄, identique ou différent, est H, CH₃, une chaîne hydrocarbonée pouvant contenir au moins un hétéroatome, linéaire ou ramifiée,
saturée ou insaturée, comprenant au moins 2 atomes de carbone,
à l'exception du copolymère :

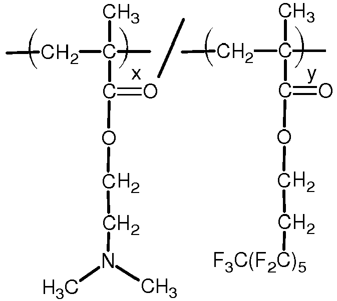

De préférence, le copolymère statistique ne comprend que des unités M, N et optionnellement P.

Les unités M, N et P sont reliées entre elles statistiquement par leur chaine principale de sorte que le copolymère statistique peut s'écrire sous la forme :

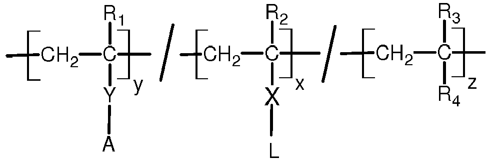

D'une manière avantageuse, les groupements Y, X, identiques ou différents, sont choisis parmi le groupe comprenant des groupes esters en C₁-C₂₀, de préférence en C₂-C₁₀, plus préférentiellement en C₂-C₆, et encore plus préférentiellement en C₂-C₅, de préférence des groupes alkylesters, de préférence linéaires, des groupes amides, et des groupes dérivés du styrène.

Les groupements fonctionnels d'intérêt A sont aptes à réagir avec la surface du substrat à épilamer, de manière à constituer des groupements d'ancrage de l'agent épilame à la surface du substrat. Avantageusement, des groupements A peuvent également être prévus en terminaison du copolymère.

D'une manière avantageuse, le copolymère comprend au moins deux groupes A différents.

Les groupements fonctionnels d'intérêt L sont responsables de l'effet épilame. Ils comprennent au moins un atome d'halogène, de préférence un atome de fluor. D'une manière préférée, L est un groupement carboné en C₂-C₂₀, de préférence en C₄-C₁₀, et plus préférentiellement en C₆-C₉. L est partiellement ou totalement halogéné. D'une manière avantageuse, L est un groupement au moins partiellement fluoré, et de préférence totalement fluoré. L peut également comprendre un atome d'hydrogène sur le groupe terminal.

Les groupements fonctionnels d'intérêt R₄ des unités P sont utilisés pour modifier les propriétés de l'agent épilame et/ou apporter d'autres fonctions. Par exemple, R₄ peut être une chaine alkyle utilisée pour modifier l'angle de contact obtenu ou une chaine capable de constituer des points de réticulation lors d'une étape de réticulation complémentaire (étape e).

De préférence, le copolymère statistique comprend entre 0.1% et 50%, de préférence entre 5% et 30%, et plus préférentiellement entre 5% et 20% d'unités M, entre 1% et 99.9%, de préférence entre 50% et 99.9%, et plus préférentiellement entre 80% et 95% d'unités N, et entre 0% et 50%, de préférence entre 0% et 30%, et plus préférentiellement entre 0% et 10% d'unités P, les pourcentages étant exprimés par rapport au nombre total d'unités (x+y+z).

D'une manière avantageuse, le copolymère statistique comprend entre 10 et 350 unités (x+y+z).

D'une manière particulièrement avantageuse, les unités M, N, P sont choisies pour porter plusieurs groupements A de nature différente, plusieurs groupements L, de préférence de même nature, et éventuellement un ou plusieurs groupements R₄ qui peuvent être identiques ou de nature différente, de manière à affiner et à améliorer les propriétés de l'agent épilame, afin d'obtenir plus spécifiquement un agent épilame universel et présentant une affinité améliorée avec le substrat.

De préférence, la surface du substrat dont au moins une partie est recouverte de l'agent épilame est réalisée dans un matériau choisi parmi le groupe comprenant les métaux, les oxydes métalliques, dopés ou non, les polymères, le saphir, le rubis, le silicium, les oxydes de silicium, les nitrures de silicium, les carbures de silicium, les DLC (Diamond Like Carbon), et leurs alliages.

Plus précisément, la surface du substrat peut être réalisée en acier, ou en métaux nobles tels que or, rhodium, palladium, platine, ou en oxydes métalliques, dopés ou non d'aluminium, zirconium, titane, chrome, manganèse, magnésium, fer, nickel, cuivre, zinc, molybdène, argent, tungstène, ou en polyoxyméthylène ou en acrylamide, ainsi que leurs alliages.

La présente invention concerne également un procédé d'épilamage d'au moins une partie d'une surface d'un substrat d'un élément d'une pièce d'horlogerie ou de bijouterie comprenant les étapes de :
a) préparation d'un agent épilame comprenant au moins un copolymère statistique tel que défini ci- dessus
b) optionnellement, préparation de la surface du substrat, notamment par nettoyage selon les procédés horlogers standards,
c) mise en contact de la surface du substrat avec l'agent épilame
d) séchage.

De préférence, la préparation de l'agent épilame est réalisée par copolymérisation statistique de monomères aptes à former les unités M avec des monomères aptes à former les unités N et optionnellement avec des monomères aptes à former au moins une unité P.

Les techniques de polymérisation statistique sont bien connues de l'homme du métier et ne nécessitent pas de description détaillée. Un mode de polymérisation particulièrement approprié est la copolymérisation radicalaire libre, en solution ou en émulsion.

Selon une première variante, le copolymère statistique peut être obtenu en une seule étape par copolymérisation, de préférence radicalaire, de monomères portant les chaines latérales Y-A avec des monomères portant les chaines latérales X-L et éventuellement des monomères portant les chaines latérales R₄.

Selon une autre variante, le copolymère statistique peut être obtenu par copolymérisation, de préférence radicalaire, de monomères portant les chaines latérales Y adéquates avec des monomères portant les chaines latérales X adéquates et éventuellement des monomères portant des chaines latérales destinées à porter R₄, puis les chaines latérales sont modifiées, par exemple par « click chemistry », pour y introduire les groupements fonctionnels d'intérêt A, L et les groupes R₄.

De préférence, les monomères sont choisis parmi le groupe comprenant les monomères acrylates, méthacrylates, acrylamides, méthacrylamides, vinyliques, diéniques, styréniques et oléfiniques.

Les monomères acrylates, méthacrylates, acrylamides, méthacrylamides, vinyliques et styréniques sont particulièrement préférés. Ces produits sont connus et pour la plupart disponibles sur le marché ou accessibles en une étape de synthèse.

Les monomères particulièrement préférés sont :

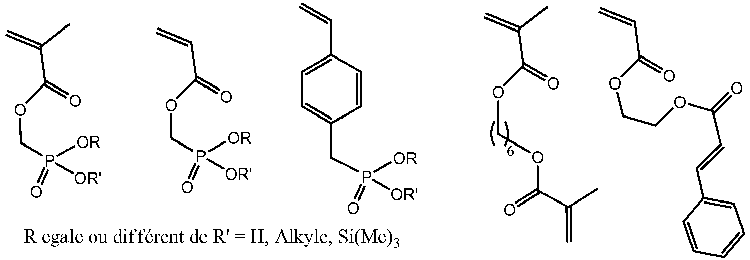

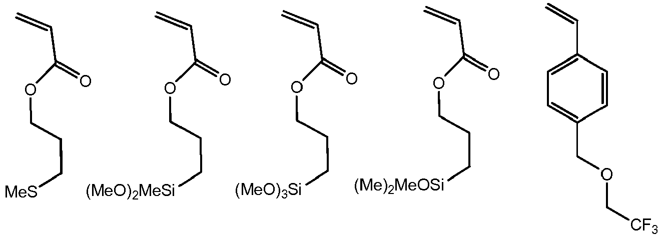

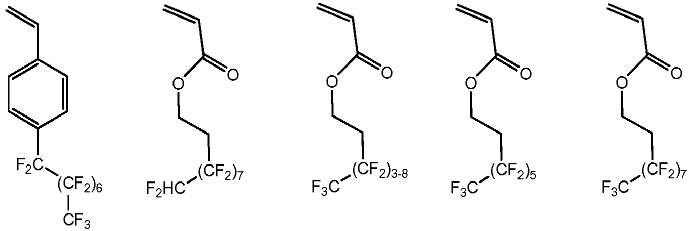

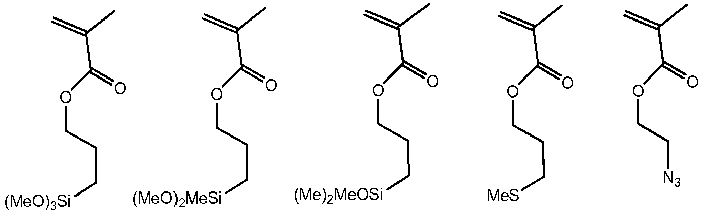

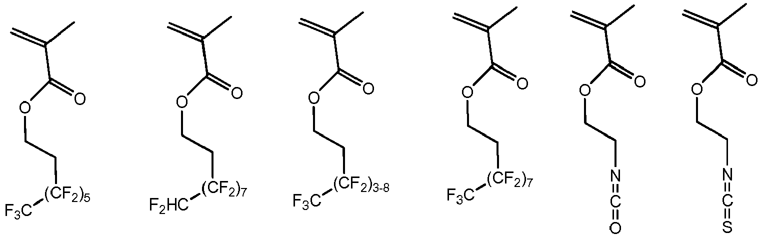

Ainsi, le copolymère utilisé comme agent épilame peut être facilement obtenu en une seule étape ou un nombre limité d'étapes à partir de produits commercialisés.

Un des copolymères utilisé de préférence dans la présente invention présente la structure suivante (I)

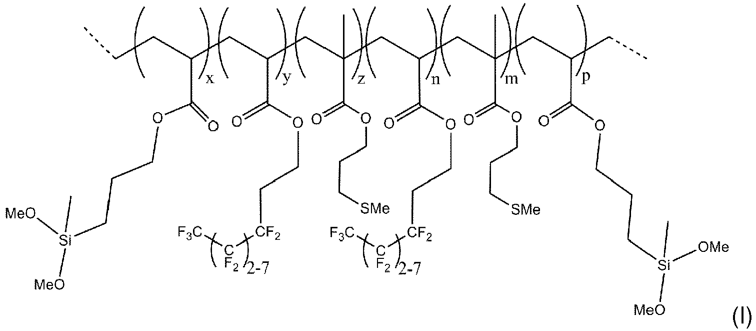

Plus particulièrement, un copolymère utilisé de préférence dans la présente invention présente la structure suivante (II):

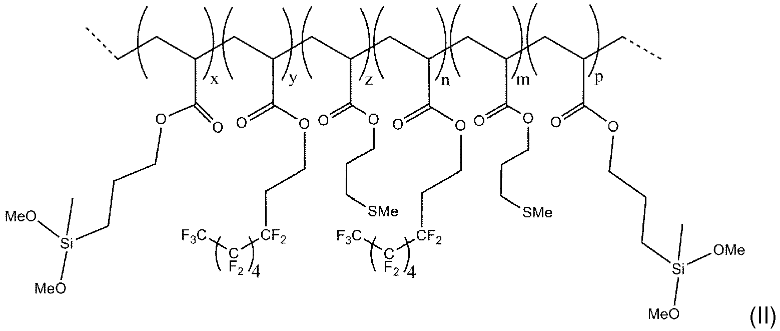

Les copolymères utilisés dans l'invention peuvent être obtenus sous la forme de poudre ou de liquide visqueux. Ils peuvent ensuite être mis en solution dans un solvant fluoré, tel que les hydrocarbures perfluorés ou fluorés, les perfluoropolyethers, les hydrofluorooléfines, les hydrofluoroethers, à des concentrations comprises de préférence entre 50 mg/L et 250 mg/L, afin d'obtenir une solution d'agent épilame, qui sera utilisée pour le traitement des surfaces à épilamer.

Selon les variantes, le procédé d'épilamage selon l'invention peut comprendre en outre, après l'étape c), une étape e) de réticulation complémentaire, rendue possible notamment par la présence des groupes fonctionnels d'intérêt appropriés prévus sur les chaines latérales R₄ des unités P.

Le substrat selon l'invention présente une surface recouverte d'un agent épilame simple et économique à synthétiser, présentant une affinité avec tout type de substrat et une résistance aux lavages améliorées par rapport aux agents épilames connus. Un élément ou une pièce présentant un substrat conforme à l'invention peut être utilisé dans tout type d'applications dans le domaine mécanique, et plus particulièrement dans la mécanique de précision, et notamment l'horlogerie et la bijouterie.

Les exemples suivants illustrent la présente invention sans toutefois en limiter la portée.

### Synthèse du 3-methacryloxopropyl methyl thioether :

Dans un tricol sous agitation magnétique placé sous azote sont ajoutés le thiomethylpropanol (4.05mL), le dichloromethane (100mL) et la triethylamine (8.2mL). La solution est refroidie dans un bain de glace puis du chlorure de methacrylate (3.8mL) est ajouté goutte à goutte sur 10 min. Le mélange réactionnel est agité pendant 2h à 0°C puis à température ambiante durant la nuit. 70 mL d'eau sont rajoutés puis le mélange réactionnel est transféré dans une ampoule à décanter. La phase organique et la phase aqueuse sont séparées. La phase organique est lavée avec une solution de HCI (pH=4) jusqu'à atteindre pH=7 puis séchée sur Na₂SO₄. Le solvant est ensuite éliminé à l'évaporateur rotatif pour conduire au produit attendu avec un rendement de 97%.

RMN¹H (CDCl₃, 500MHz): déplacement chimique (ppm) : 6.10 (s, 1H), 5.56 (s, 1H), 4.24 (t, 2H), 2.58 (t, 2H), 2.11 (s, 3H), 1.99 (m, 2H), 1.94 (s, 3H)

### Exemple 1

On synthétise un agent épilame sous la forme d'un copolymère statistique par polymérisation radicalaire libre de :
- 3-acryloxopropyl methyldimethoxysilane
- 1H,1H,2H,2H-Perfluorodecylacrylate
- 3-methacryloxopropyl methyl thioether préparé tel qu'indiqué ci-dessus
selon le mode opératoire suivant:
dans un tube de Schlenk contenant la cyclohexanone (2.5mL) préalablement dégazée à l'azote, sont ajoutés le 3-acryloxopropyl methyldimethoxysilane (189µL) et 3-methacryloxopropyl methyl thioether (159µL) puis le 1H,1H,2H,2H-Perfluorodecylacrylate (2.3mL). Le milieu réactionnel est barboté 5 min à l'azote puis 0.8mL de Novec™ hydrofluoroether HFE-7200 (3M™) préalablement barboté à l'azote sont ajoutés. 0.5mL d'une solution d'azobisisobutyronitrile (AIBN) à 0.228mol/L est ajouté. Le milieu réactionnel est agité et chauffé à 80°C pendant 3h. Le polymère est coagulé dans le méthanol puis rincé avec 3*50mL. Le polymère est obtenu sous forme d'une poudre blanche (rendement =90%).

On obtient le copolymère statistique suivant :

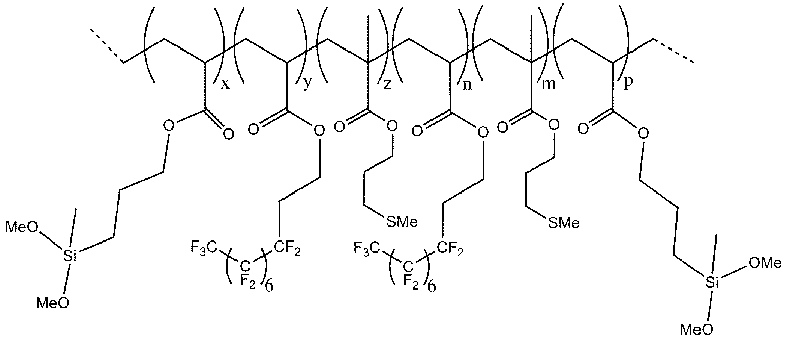

### Exemple 2

On synthétise un agent épilame sous la forme d'un copolymère statistique réticulé par polymérisation radicalaire libre de :
- 3-acryloxopropyl methyldimethoxysilane
- 1H,1H,2H,2H-Perfluorodecylacrylate
- 3-methacryloxopropyl methyl thioether
- 1,6-Hexanediol dimethacrylate
selon le mode opératoire suivant:
dans un tube de Schlenk contenant la cyclohexanone (2.5mL) préalablement dégazée a l'azote, sont ajoutés le 3-acryloxopropyl methyldimethoxysilane (189µL) et 3-methacryloxopropyl methyl thioether (159µL), 1,6-Hexanediol dimethacrylate (12µL) puis le 1H,1H,2H,2H-Perfluorodecylacrylate (2.3mL). Le milieu réactionnel est barboté 5 min a l'azote puis 0.8mL de Novec™ HFE-7200 préalablement barboté à l'azote sont ajoutés. 0.5mL d'une solution d'AIBN à 0.228mol/L est ajouté. Le milieu réactionnel est agité et chauffé à 80°C pendant 3h. Le polymère est coagulé dans le méthanol puis rincé avec 3*50mL. Le polymère est obtenu sous forme d'une poudre blanche (rendement =97%).

On obtient le copolymère statistique réticulé suivant :

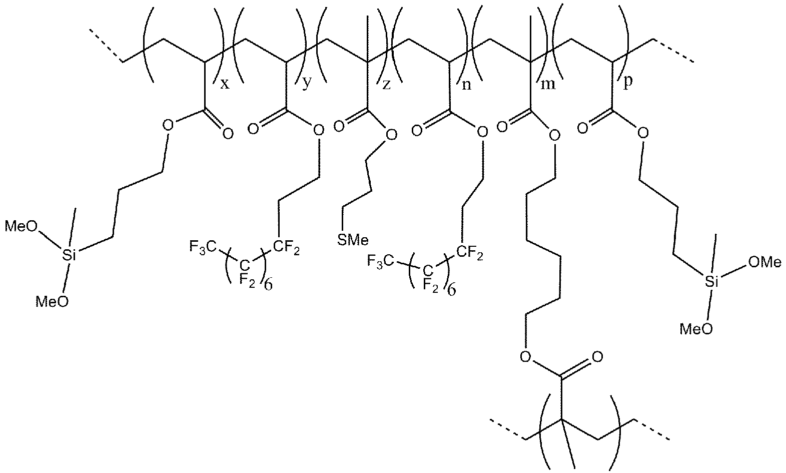

Dans ce copolymère, la chaine latérale R₄ des unités P est réticulée avec la chaine latérale d'un autre copolymère.

### Exemple 3

On synthétise un agent épilame sous la forme d'un copolymère statistique post-réticulable par polymérisation radicalaire libre de :
- 3-acryloxopropyl methyldimethoxysilane
- 1H,1H,2H,2H-Perfluorodecylacrylate
- 3-methacryloxopropyl methyl thioether
- 2-Cinnamoyloxyethyl acrylate (monomère post-réticulable) selon le mode opératoire suivant:
   dans un tube de Schlenk contenant la cyclohexanone (2.5mL) préalablement dégazée a l'azote, sont ajoutés le 3-acryloxopropyl methyldimethoxysilane (189µL) et 3-methacryloxopropyl methyl thioether (159µL), 2-Cinnamoyloxyethyl acrylate (92mg) puis le 1H,1H,2H,2H-Perfluorodecylacrylate (2.2mL). Le milieu réactionnel est barboté 5 min a l'azote puis 0.8mL de Novec™ HFE-7200 préalablement barboté à l'azote sont ajoutés. 0.5mL d'une solution d'AIBN à 0.228mol/L est ajouté. Le milieu réactionnel est agité et chauffé à 80°C pendant 3h. Le polymère est coagulé dans le méthanol puis lavé avec 3*50mL. Le polymère est obtenu sous forme d'une poudre blanche (rendement =90%).

On obtient le copolymère statistique post-réticulable suivant :

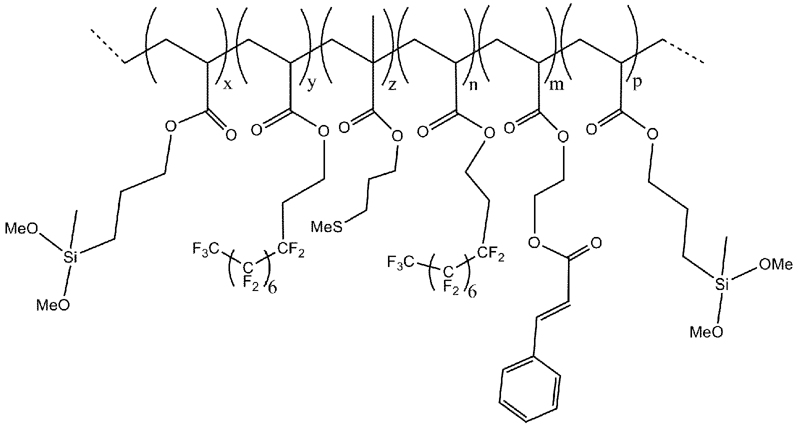

Dans ce copolymère, la chaine latérale R₄ peut être réticulée aux UV juste après la synthèse ou après le dépôt sur substrat.

### Exemple 4

On synthétise un agent épilame sous la forme d'un copolymère statistique par polymérisation radicalaire libre de :
- 3-acryloxopropyl methyltrimethoxysilane
- 1H,1H,2H,2H-Perfluorodecylacrylate
- (dimethoxyphosphoryl)methyl 2-methylacrylate
- 2-thioethyl methacrylamide (synthétisé selon la procédure décrite dans la publication : Synthesis and characterization of a high selective mercury(II)-imprinted polymer using novel aminothiol monomer, Talanta, 101, 261-266; 2012)
selon le mode opératoire suivant:
dans un tube de Schlenk contenant la cyclohexanone (2.5mL) préalablement dégazée à l'azote, sont ajoutés le 3-acryloxopropyl methyltrimethoxysilane (378µL) et 2-thioethyl methacrylamide (132µL) puis le 1H,1H,2H,2H-Perfluorodecylacrylate (2.3mL). Le milieu réactionnel est barboté 5 min à l'azote puis 0.8mL de Novec™ HFE-7200 préalablement barboté à l'azote sont ajoutés. 0.5mL d'une solution d'azobisisobutyronitrile (AIBN) à 0.228mol/L est ajouté. Le milieu réactionnel est agité et chauffé à 80°C pendant 3h. Le polymère est coagulé dans le méthanol puis rincé avec 3*50mL. Le polymère est obtenu sous forme d'une poudre blanche (rendement =90%).

On obtient le copolymère statistique suivant :

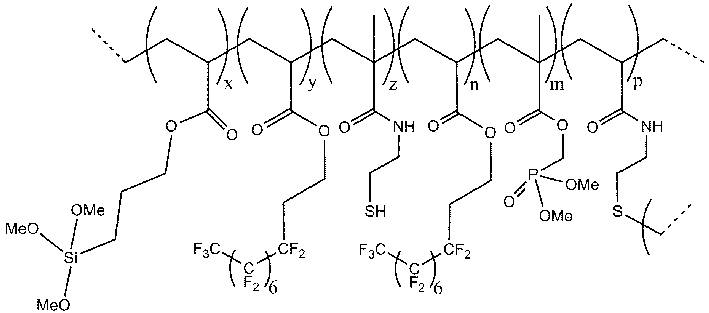

### Exemple 5

On synthétise un agent épilame sous la forme d'un copolymère statistique par polymérisation radicalaire libre de :
- 3-acryloxopropyl methyldimethoxysilane
- 1H,1H,2H,2H-Perfluorooctylacrylate
- 3-acryloxopropyl methyl thioether (obtenu selon le mode opératoire décrit dans la littérature : Préparation of biomimetic polymer hydrogel materials for contact lenses Bertozzi, Carolyn et al. US 6552103)
selon le mode opératoire suivant:
dans un tube de Schlenk contenant la cyclohexanone (2mL) préalablement dégazée à l'azote, sont ajoutés le 3-acryloxopropyl methyldimethoxysilane (148µL) et 3-acryloxopropyl methylthioether (108µL) puis le 1H,1H,2H,2H-Perfluorooctylacrylate (2.1mL). Le milieu réactionnel est barboté 5 min à l'azote puis 0.8mL d'hydrofluoroether (Novec HFE-7200) préalablement barboté à l'azote sont ajoutés. 0.5mL d'une solution d'azobisisobutyronitrile (AIBN) à 0.228mol/L est ajouté. Le milieu réactionnel est agité et chauffé à 80°C pendant 3h. Le polymère est coagulé dans le méthanol puis rincé avec 3*50mL. Le polymère est obtenu sous forme d'un gel translucide (rendement =90%).

On obtient le copolymère statistique suivant :

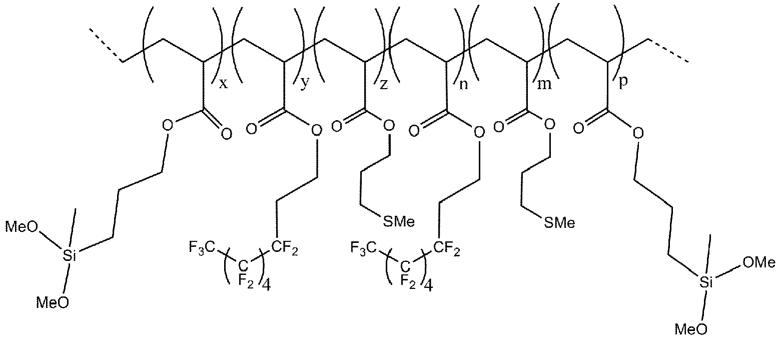

### Exemple 6 : Résistance au lavage

### Procédures utilisées :

### Préparation des substrats :

Avant le traitement épilame, des substrats de différente nature sont nettoyés par les procédés horlogers standards. Plus particulièrement, les pièces sont nettoyées avec une solution de Rubisol en présence d'ultrasons, rincées 3 fois avec de l'alcool isopropylique, puis séchées à l'air chaud .

### Traitement épilame des substrats :

Les substrats sont épilamés par immersion (environ 5 min) dans une solution de l'agent épilame (solvant : Vertrel® Suprion™ de DuPont™ à 250mg/L) puis séchage à l'air chaud.

### Résistance aux lavages :

La résistance aux lavages des agents épilames est évaluée après 3 lavages successifs (lavage horloger standard avec une solution de Rubisol) des pièces épilamées.

### Anales de contact :

L'efficacité de l'agent épilame est évaluée par le dépôt de gouttes de 2 lubrifiants: huile MOEBIUS Testöl 3 et 9010. Pour chaque lubrifiant et chaque agent épilame, les angles de contact entre les substrats et les lubrifiants ont été mesurés sur un appareil Dataphysics de type OCA.

### Résultats:

Les différents substrats sont épilamés avec soit l'agent épilame de l'exemple 1, soit avec l'agent épilame de l'exemple 4. Puis les substrats sont lavés avec 3 lavages horlogers.

A titre comparatif, différents substrats sont épilamés :
- soit avec le Fixodrop® FK/BS de Moebius® (parmi les épilames du marché les plus utilisés)
- soit avec l'agent épilame M51 ci-dessous, décrit dans la publication WO 2014/009058
suivi de 3 lavages horlogers.

Polymère M51

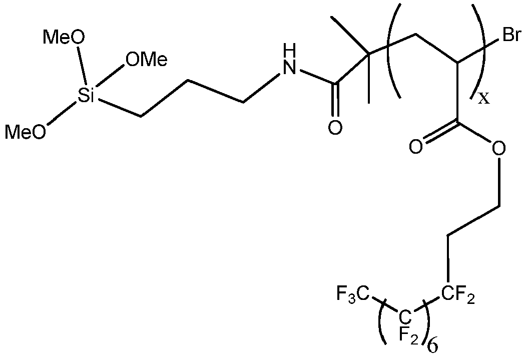

L'agent épilame M51 est connu comme l'un des agents épilames résistant le mieux aux lavages horlogers.

Des gouttes d'huile Testöl 3, respectivement d'huile 9010, sont déposées sur chaque substrat épilamé et les angles de contact entre les substrats et les lubrifiants sont mesurés.

Les résultats sont indiqués dans les tableaux ci-dessous qui rapportent les valeurs des angles de contact mesurés:

**Tableau 1 :**

| Angles de contact mesurés avec l'huile MOEBIUS 9010 | | | | | | |
|---|---|---|---|---|---|---|
| | Substrat | | | | | |
| Agent épilame | Saphir | Acier | Nickel | Rhodium | Or | polyoxyméthylène Hostaform® de Celanese |
| **Exemple 1 (inv.)** | **77** | **82** | **67** | **75** | **78** | **62** |
| **Exemple 4 (inv.)** | **74** | **75** | **69** | **60** | **72** | **-** |
| M 51 (comp.) | 75 | 44 | 46 | 41 | 59 | - |
| Fixodrop®(comp.) | 45 | 50 | 41 | 36 | 40 | 35 |

**Tableau 2 :**

| Angles de contact mesurés avec l'huile MOEBIUS Testöl 3 | | | | | | |
|---|---|---|---|---|---|---|
| | Substrat | | | | | |
| Agent épilame | Saphir | Acier | Nickel | Rhodium | Or | POM Hostaform® |
| **Exemple 1 (inv.)** | **62** | **59** | **54** | **53** | **63** | **47** |
| **Exemple 4 (inv.)** | **56** | **58** | **53** | **45** | **55** | **-** |
| M 51 (comp.) | 60 | 34 | 37 | 36 | 47 | - |
| Fixodrop® (comp.) | 34 | 32 | 29 | 24 | 33 | 30 |

### Conclusion :

Les résultats ci-dessus montrent que les angles de contact obtenus après trois lavages horlogers avec les deux huiles (Testöl 3 et 9010) sont largement supérieurs pour les substrats épilamés selon l'invention par rapport au substrat épilamé par un agent épilame connu. L'effet épilame après trois lavages horlogers est donc largement supérieur avec les substrats épilamés selon la présente l'invention. Ceci démontre que les substrats épilamés selon l'invention présentent une meilleure résistance au lavage, quelle que soit leur nature.

## Revendications

1. Pièce d'horlogerie ou de bijouterie comprenant un élément comportant un substrat comprenant une surface dont au moins une partie est recouverte d'un agent épilame, **caractérisée en ce que** ledit agent épilame comprend au moins un composé sous la forme d'un copolymère statistique comprenant des unités M, des unités N et optionnellement au moins une unité P, associées par liaisons covalentes par leurs chaines principales et réparties de manière aléatoire, où
M est 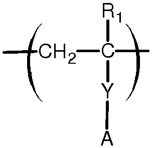 N est 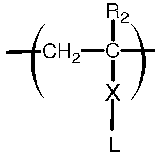 P est 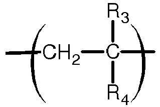
où R₁, R₂, R₃, identiques ou différents, sont H, un groupe alkyle en C₁-C₁₀, alkényle en C₁-C₁₀, et de préférence H, CH₃ Y, X, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone
A, identique ou différent, constitue un groupement d'ancrage au substrat, et est choisi parmi le groupe comprenant les thiols, thioethers, thioesters, sulfures, thioamides, silanols, alkoxysilanes, halogénures de silane, hydroxyles, phosphates, acides phosphoniques protégés ou non, phosphonates protégés ou non, aminés, ammoniums, hétérocycles azotés, acides carboxyliques, anhydrides, catéchol
L, identique ou différent, est un groupement carboné en C₁-C₂₀ halogéné, de préférence fluoré
R₄, identique ou différent, est H, CH₃, une chaîne hydrocarbonée pouvant contenir au moins un hétéroatome, linéaire ou ramifiée, saturée ou insaturée, comprenant au moins 2 atomes de carbone.

2. Pièce d'horlogerie ou de bijouterie selon la revendication 1, **caractérisée en ce que** Y, X, identiques ou différents, sont choisis parmi le groupe comprenant des groupes esters en C₁-C₂₀, de préférence en C₂-C₁₀, des groupes amides, et des groupes dérivés du styrène.

3. Pièce d'horlogerie ou de bijouterie selon l'une des revendications précédentes, **caractérisée en ce que** le copolymère comprend au moins deux groupes A différents.

4. Pièce d'horlogerie ou de bijouterie selon l'une des revendications précédentes, **caractérisée en ce que** L est un groupement carboné en C₂-C₂₀, de préférence en C₄-C₁₀.

5. Pièce d'horlogerie ou de bijouterie selon l'une des revendications précédentes, **caractérisée en ce que** L est un groupement au moins partiellement fluoré, de préférence totalement fluoré.

6. Pièce d'horlogerie ou de bijouterie selon l'une des revendications précédentes, **caractérisée en ce que** le copolymère statistique comprend entre 0.1% et 50%, de préférence entre 5% et 30% d'unités M, entre 1% et 99.9%, de préférence entre 50% et 99.9% d'unités N, et entre 0% et 50%, de préférence entre 0% et 30% d'unités P.

7. Pièce d'horlogerie ou de bijouterie selon l'une des revendications précédentes, **caractérisée en ce que** le copolymère statistique comprend entre 10 et 350 unités.

8. Pièce d'horlogerie ou de bijouterie selon l'une des revendications précédentes, **caractérisée en ce que** sa surface dont au moins une partie est recouverte de l'agent épilame est réalisée dans un matériau choisi parmi le groupe comprenant les métaux, les oxydes métalliques, les polymères, le saphir, le rubis, le silicium, les oxydes de silicium, les nitrures de silicium, les carbures de silicium, les DLC (Diamond Like Carbon), et leurs alliages.

9. Procédé d'épilamage d'au moins une partie d'une surface d'un substrat d'un élément d'une pièce d'horlogerie ou de bijouterie comprenant les étapes de :
a) préparation d'un agent épilame comprenant au moins un copolymère statistique tel que défini aux revendications 1 à 7
b) optionnellement, préparation de la surface du substrat
c) mise en contact de la surface du substrat avec l'agent épilame
d) séchage.

10. Procédé d'épilamage selon la revendication 9, **caractérisé en ce que** la préparation de l'agent épilame est réalisée par copolymérisation statistique de monomères aptes à former les unités M avec des monomères aptes à former les unités N et optionnellement avec des monomères aptes à former au moins une unité P.

11. Procédé d'épilamage selon l'une des revendications 9 à 10, **caractérisé en ce qu'**il comprend en outre, après l'étape c), une étape e) de réticulation complémentaire.

12. Procédé d'épilamage selon l'une des revendications 9 à 11, caractérisé ce que les monomères sont choisis parmi le groupe comprenant les monomères acrylates, méthacrylates, acrylamides, méthacrylamides, vinyliques et styréniques.

13. Utilisation d'un copolymère statistique comprenant des unités M, des unités N et optionnellement au moins une unité P, associées par liaisons covalentes par leurs chaines principales et réparties de manière aléatoire, où
M est 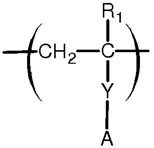 N est 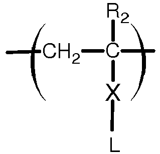 P est 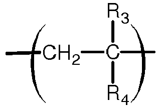
où R₁, R₂, R₃, identiques ou différents, sont H, un groupe alkyle en C₁-C₁₀, alkényle en C₁-C₁₀, et de préférence H, CH₃ Y, X, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone
A, identique ou différent, constitue un groupement d'ancrage au substrat, et est choisi parmi le groupe comprenant les thiols, thioethers, thioesters, sulfures, thioamides, silanols, alkoxysilanes, halogénures de silane, hydroxyles, phosphates, acides phosphoniques protégés ou non, phosphonates protégés ou non, aminés, ammoniums, hétérocycles azotés, acides carboxyliques, anhydrides, catéchol
L, identique ou différent, est un groupement carboné en C₁-C₂₀ halogéné, de préférence fluoré
R₄, identique ou différent, est H, CH₃, une chaîne hydrocarbonée pouvant contenir au moins un hétéroatome, linéaire ou ramifiée, saturée ou insaturée, comprenant au moins 2 atomes de carbone, comme agent épilame d'au moins une partie d'une surface d'un substrat d'un élément d'une pièce d'horlogerie ou de bijouterie.

## Patentansprüche

1. Uhren- oder Schmuckteil, umfassend ein Element mit einem Substrat, das eine Oberfläche aufweist, von der mindestens ein Teil mit einem Epilamisierungsmittel bedeckt ist, **dadurch gekennzeichnet, dass** das Epilamisierungsmittel mindestens eine Zusammensetzung in Form eines statistischen Copolymers enthält, das Einheiten M, Einheiten N und gegebenenfalls mindestens eine Einheit P enthält, die durch kovalente Bindungen über ihre Hauptketten verbunden sind und zufällig verteilt sind, wobei
M ist 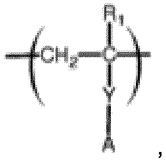 N ist 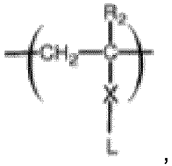 P ist 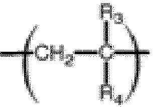
wobei R₁, R₂, R₃, gleich oder unterschiedlich, H, eine Alkylgruppe mit C₁-C₁₀, Alkenyl mit C₁-C₁₀ und vorzugsweise H, CH₃ sind,
Y, X, gleich oder unterschiedlich, Abstandshalterarme sind, gebildet aus einem Heteroatom oder aus einer Kohlenwasserstoffkette, die mindestens ein lineares oder verzweigtes Heteroatom enthalten kann, das mindestens ein Kohlenstoffatom enthält,
A, gleich oder unterschiedlich, eine Gruppe für die Verankerung mit dem Substrat bildet und aus der Gruppe ausgewählt ist, die Thiol, Thioether, Thioester, Sulfid, Thioamid, Silanol, Alkoxyysilan, Silanhalogenid, Hydroxyl, Phosphat, geschützte oder nicht geschützte phosphonische Säure, geschütztes oder nicht geschütztes Phosphonat, Amin, Ammonium, nitrierte Heterozyklen, Carboxylsäure, Anhydrid und Catechol enthält,
L, gleich oder unterschiedlich, eine halogenierte, vorzugsweise fluorierte Kohlenstoffgruppe mit C₁-C₂₀ ist und
R₄, gleich oder unterschiedlich, H, CH₃, eine Kohlenwasserstoffkette ist, die mindestens ein lineares oder verzweigtes, gesättigtes der ungesättigtes Heteroatom mit mindestens zwei Kohlenstoffatomen enthalten kann.

2. Uhren- oder Schmuckteil nach Anspruch 1, **dadurch gekennzeichnet, dass** Y, X, gleich oder unterschiedlich, aus der Gruppe ausgewählt sind, die Estergruppen mit C₁-C₂₀, vorzugsweise mit C₂-C₁₀, Amidgruppen und Styrol-Derivatgruppen enthält.

3. Uhren- oder Schmuckteil nach einem der vorhergehenden Ansprüche, **dadurch gekennzeichnet, dass** das Copolymer mindestens zwei verschiedene Gruppen A enthält.

4. Uhren- oder Schmuckteil nach einem der vorhergehenden Ansprüche, **dadurch gekennzeichnet, dass** L eine Kohlenwasserstoffgruppe mit C₂-C₂₀, vorzugsweise mit C₄-C₁₀, ist.

5. Uhren- oder Schmuckteil nach einem der vorhergehenden Ansprüche, **dadurch gekennzeichnet, dass** L eine mindestens teilweise fluorierte Gruppe, vorzugsweise vollständig fluorierte Gruppe, ist.

6. Uhren- oder Schmuckteil nach einem der vorhergehenden Ansprüche, **dadurch gekennzeichnet, dass** das statistische Copolymer zwischen 0,1 % und 50 %, vorzugsweise zwischen 5 % und 30 % Einheiten M, zwischen 1 % und 99,9 %, vorzugsweise zwischen 50 % und 99,9 % Einheiten N und zwischen 0 % und 50 %, vorzugsweise zwischen 0 % und 30 % Einheiten P enthält.

7. Uhren- oder Schmuckteil nach einem der vorhergehenden Ansprüche, **dadurch gekennzeichnet, dass** das statistische Copolymer zwischen 10 und 350 Einheiten enthält.

8. Uhren- oder Schmuckteil nach einem der vorhergehenden Ansprüche, **dadurch gekennzeichnet, dass** seine Oberfläche, von der mindestens ein Teil mit einem Epilamisierungsmittel bedeckt ist, aus einem Material hergestellt ist, das aus der Gruppe ausgewählt ist, die Metalle, Metalloxide, Polymere, Saphir, Rubin, Silicium, Siliciumoxide, Siliciumnitride, Siliciumcarbide, DLCs (Diamond Like Carbon) und deren Legierungen enthält.

9. Verfahren zum Epilamisieren mindestens eines Teils einer Oberfläche eines Substrats eines Elements eines Uhren- oder Schmuckteils, umfassend die folgenden Schritte:
a) Herstellen eines Epilamisierungsmittels, das mindestens ein statistisches Copolymer, wie in den Ansprüchen 1 bis 7 definiert, enthält,
b) optional Vorbereiten der Substratoberfläche,
c) In-Kontrakt-bringen der Substratoberfläche mit dem Epilamisierungsmittel,
d) Trocknen.

10. Epilamisierungsverfahren nach Anspruch 9, **dadurch gekennzeichnet, dass** das Herstellen des Epilamisierungsmittels durch statistische Copolymerisation von Monomeren, die geeignet sind, die Einheiten M zu bilden, mit Monomeren, die geeignet sind, die Einheiten N zu bilden, und optional mit Monomeren, die geeignet sind, mindestens eine Einheit P zu bilden, ausgeführt wird.

11. Epilamisierungsverfahren nach einem der Ansprüche 9 bis 10, **dadurch gekennzeichnet, dass** es ferner nach dem Schritt c) einen Schritt e) der komplementären Vernetzung umfasst.

12. Epilamisierungsverfahren nach einem der Ansprüche 9 bis 11, **dadurch gekennzeichnet, dass** die Monomere aus der Gruppe ausgewählt sind, die Acrylat-, Methacrylat-, Acrylamid-, Methacrylamid-, Vinyl- und Styrolmonomere enthält.

13. Verwendung eines statistischen Copolymers, das Einheiten M, Einheiten N und optional mindestens eine Einheit P enthält, die durch kovalente Bindungen über ihre Hauptketten verbunden sind und zufällig verteilt sind, wobei
M ist 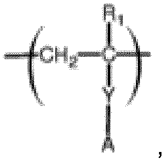 N ist 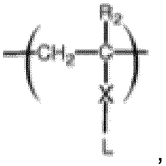 P ist 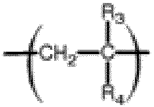
wobei R₁, R₂, R₃, die gleich oder unterschiedlich sind, H, eine Alkylgruppe mit C₁-C₁₀, Alkenyl mit C₁-C₁₀ und vorzugsweise H, CH₃ sind,
Y, X, die gleich oder unterschiedlich sind, Abstandshalterarme sind, gebildet aus einem Heteroatom oder aus einer Kohlenwasserstoffkette, die mindestens ein lineares oder verzweigtes Heteroatom enthalten kann, das mindestens ein Kohlenstoffatom enthält,
A, das gleich oder unterschiedlich ist, eine Gruppe für die Verankerung mit dem Substrat bildet und aus der Gruppe ausgewählt ist, die Thiol, Thioether, Thioester, Sulfid, Thioamid, Silanol, Alkoxyysilan, Silanhalogenid, Hydroxyl, Phosphat, geschützte oder nicht geschützte phosphonische Säure, geschütztes oder nicht geschütztes Phosphonat, Amin, Ammonium, nitrierte Heterozyklen, Carboxylsäure, Anhydrid und Catechol enthält,
L, das gleich oder unterschiedlich ist, eine halogenierte, vorzugsweise fluorierte Kohlenstoffgruppe mit C₁-C₂₀ ist und
R₄, das gleich oder unterschiedlich ist, H, CH₃, eine Kohlenwasserstoffkette ist, die mindestens ein lineares oder verzweigtes, gesättigtes der ungesättigtes Heteroatom mit mindestens zwei Kohlenstoffatomen enthalten kann,
als ein Epilamisierungsmittel für mindestens einen Teil einer Substratoberfläche eines Elements eines Uhren- oder Schmuckteils.

## Claims

1. Timepiece or piece of jewellery comprising an element including a substrate comprising a surface, at least one part of which is coated with an epilamisation agent, **characterised in that** said epilamisation agent comprises at least one compound in the form of a statistical copolymer comprising M units, N units and optionally at least one P unit, linked by covalent bonds by their main chains and randomly distributed, where
M is 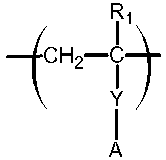 N is 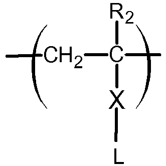 P is 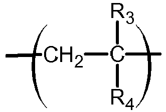
where R₁, R₂, R₃, which may be identical or different, are H, a C₁-C₁₀ alkyl group, a C₁-C₁₀ alkenyl group, and preferably H, a CH₃ group,
Y, X, which may be identical or different, are spacer arms formed of a heteroatom or of a linear or branched hydrocarbon chain comprising at least one carbon atom, and that may contain at least one heteroatom,
A, which may be identical or different, forms an anchoring moiety to the substrate, and is chosen from the group comprising thiols, thioethers, thioesters, sulphides, thioamides, silanols, alkoxysilanes, silane halides, hydroxyls, phosphates, protected or non-protected phosphonic acids, protected or non-protected phosphonates, amines, ammoniums, nitrogenated heterocycles, carboxylic acids, anhydrides, catechol,
L, which may be identical or different, is a halogenated, preferably fluorinated, C₁-C₂₀ carbon moiety,
R₄, which may be identical or different, is H, CH₃, a linear or branched, saturated or unsaturated hydrocarbon chain comprising at least 2 carbon atoms, and that may contain at least one heteroatom.

2. Timepiece or piece of jewellery according to claim 1, **characterised in that** Y, X, which may be identical or different, are selected from the group comprising C₁-C₂₀ ester groups, preferably C₂-C₁₀ ester groups, amide groups, and styrene derivative groups.

3. Timepiece or piece of jewellery according to any of the preceding claims, **characterised in that** the copolymer comprises at least two different A moieties.

4. Timepiece or piece of jewellery according to any of the preceding claims, **characterised in that** L is a C₂-C₂₀ carbon moiety, preferably a C₄-C₁₀ carbon moiety.

5. Timepiece or piece of jewellery according to any of the preceding claims, **characterised in that** L is an at least partially fluorinated moiety, preferably a completely fluorinated moiety.

6. Timepiece or piece of jewellery according to any of the preceding claims, **characterised in that** the statistical copolymer comprises between 0.1% and 50%, preferably between 5% and 30% of M units, between 1% and 99.9%, preferably between 50% and 99.9% of N units, and between 0% and 50%, preferably between 0% and 30% of P units.

7. Timepiece or piece of jewellery according to any of the preceding claims, **characterised in that** the statistical copolymer comprises between 10 and 350 units.

8. Timepiece or piece of jewellery according to any of the preceding claims, **characterised in that** the surface thereof, at least part of which is coated with the epilamisation agent, is made of a material chosen from the group comprising metals, metal oxides, polymers, sapphire, ruby, silicon, silicon oxides, silicon nitrides, silicon carbides, DLC, and alloys thereof.

9. Method for epilamisation of at least one part of a surface of a substrate of an element of a timepiece or piece of jewellery comprising the steps of:
a) preparing an epilamisation agent comprising at least one statistical copolymer as defined in claims 1 to 7
b) optionally, preparing the substrate surface
c) placing the substrate surface in contact with the epilamisation agent
d) drying.

10. Epilamisation method according to claim 9, **characterised in that** the preparation of the epilamisation agent is achieved by the statistical copolymerisation of monomers capable of forming M units with monomers capable of forming N units and optionally with monomers capable of forming at least one P unit.

11. Epilamisation method according to any of claims 9 to 10, **characterised in that** after step c), the method also comprises a complementary cross-linking step e).

12. Epilamisation method according to any of claims 9 to 11, **characterised in that** the monomers are selected from the group comprising acrylate, methacrylate, acrylamide, methacrylamide, vinyl and styrene monomers.

13. Use of a statistical copolymer comprising M units, N units and optionally at least one P unit, linked by covalent bonds by their main chains and randomly distributed, where
M is 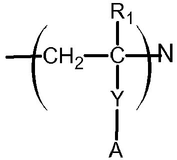 is 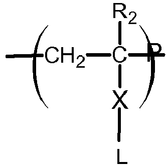 is 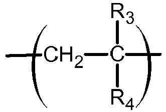
where R₁, R₂, R₃, which may be identical or different, are H, a C₁-C₁₀ alkyl group, a C₁-C₁₀ alkenyl group, and preferably H, a CH₃ group,
Y, X, which may be identical or different, are spacer arms formed of a heteroatom or of a linear or branched hydrocarbon chain comprising at least one carbon atom, and that may contain at least one heteroatom,
A, which may be identical or different, forms an anchoring moiety to the substrate, and is chosen from the group comprising thiols, thioethers, thioesters, sulphides, thioamides, silanols, alkoxysilanes, silane halides, hydroxyls, phosphates, protected or non-protected phosphonic acids, protected or non-protected phosphonates, amines, ammoniums, nitrogenated heterocycles, carboxylic acids, anhydrides, catechol,
L, which may be identical or different, is a halogenated, preferably fluorinated, C₁-C₂₀ carbon moiety,
R₄, which may be identical or different, is H, CH₃, a linear or branched, saturated or unsaturated hydrocarbon chain comprising at least 2 carbon atoms, and that may contain at least one heteroatom,
as epilamisation agent for at least one part of a surface of a substrate of an element of a timepiece or piece of jewellery.
